(19) Europäisches Patentamt
European Patent Office
Office européen des brevets

(11) **EP 2 162 609 B1**

(12) **FASCICULE DE BREVET EUROPEEN**

(45) Date de publication et mention
de la délivrance du brevet:
**19.09.2012 Bulletin 2012/38**

(51) Int Cl.:
***F02D 41/00*** *(2006.01)*     ***F02D 41/06*** *(2006.01)*
***F02D 19/06*** *(2006.01)*     ***F02N 19/00*** *(2010.01)*

(21) Numéro de dépôt: **08806096.7**

(22) Date de dépôt: **26.06.2008**

(86) Numéro de dépôt international:
**PCT/FR2008/051167**

(87) Numéro de publication internationale:
**WO 2009/007605 (15.01.2009 Gazette 2009/03)**

(54) **PROCEDE DE DEMARRAGE D'UN MOTEUR A COMBUSTION INTERNE**

VERFAHREN ZUM STARTEN EINES VERBRENNUNGSMOTORS

METHOD FOR STARTING AN INTERNAL COMBUSTION ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **09.07.2007 FR 0756333**

(43) Date de publication de la demande:
**17.03.2010 Bulletin 2010/11**

(73) Titulaire: **Peugeot Citroën Automobiles SA**
**78140 Vélizy-Villacoublay (FR)**

(72) Inventeur: **GOURVES, Frédéric**
**F-95800 Courdimanche (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
**EP-A- 1 517 024      WO-A-2006/109543**
**DE-A1- 10 217 376**

**Description**

L'invention concerne un procédé de démarrage d'un moteur à combustion interne pour véhicule automobile. Ce procédé est notamment utile lors d'opérations de démarrages à froid. De façon générale, l'invention vise à réduire les émissions polluantes à la source, des moteurs à essence.

La qualité du carburant utilisé pour les véhicules est très variable, notamment en fonction de la zone géographique où circule le véhicule. Une propriété physique du carburant particulièrement variable est sa capacité à se vaporiser, autrement dit sa plus ou moins grande volatilité. Cette capacité est bien connue dans la littérature anglo-saxonne sous l'acronyme PVR pour Pression Vapeur Raid. Cet acronyme sera utilisé dans la suite de la description de l'invention. Pour les carburants se vaporisant bien, on parle de carburant HPVR (Haut PVR) et pour les carburants se vaporisant mal, on parle de carburant BPVR (Bas PVR).

Pour pouvoir démarrer correctement, un moteur à essence a besoin d'avoir un mélange d'air et d'essence proche d'un mélange stoechiométrique. Cela suppose que la quantité de carburant sous forme gazeuse soit bien maîtrisée. Or, selon la volatilité du carburant, la quantité de carburant sous forme gazeuse participant à la combustion au démarrage à froid et à la mise en action du moteur varie énormément pour une même quantité de carburant injectée.

Afin de garantir une quantité de carburant sous forme gazeuse suffisante pour réaliser de bonnes combustions au démarrage et à la mise en action du moteur, les calibrations sont réalisés avec un carburant représentatif d'un carburant de relativement basse volatilité (BVPR). Ensuite, des vérifications sont réalisées pour s'assurer que lorsque l'on utilise un carburant plus volatil, de type HPVR, les quantités injectées ne sont pas trop grandes et ne risquent pas d'empêcher la combustion par un excès d'essence sous forme vapeur. Le mélange ne serait alors pas inflammable.

Le réglage est donc le même quel que soit le carburant. En conséquence, lorsque l'on utilise un carburant relativement plus volatil, , la quantité de carburant sous forme vapeur est en excès lors du démarrage et la mise en action du moteur. Cet excès ne participe pas à la combustion et se retrouve à l'échappement du moteur sous formes d'hydrocarbures imbrûlés (HC). Ceci a un impact direct sur les émissions polluantes du moteur. Lorsque le véhicule est équipé d'un catalyseur, celui-ci n'est pas amorcé à froid et les hydrocarbures imbrûlés s'échappent dans l'atmosphère.

Lors de démarrage pas grand froid, lorsque la température ambiante est en dessous de -15°C, l'excès de carburant sous forme vapeur crée également des fumées noires à l'échappement.

On a tenté de résoudre ce problème en adaptant la quantité de carburant injectée dans un cylindre du moteur lors des phases de démarrage en fonction de la capacité du carburant à se vaporiser. La mesure directe de cette capacité étant difficile à réaliser à bord du véhicule, la capacité du carburant à se vaporiser a été estimée en fonction d'un gradient de régime du moteur intervenant après une première combustion dans un cylindre du moteur, par exemple dans EP A 517 024 A1. On peut calibrer ce gradient en fonction de différents types de carburants ayant différentes capacités à ce vaporiser.

Cette méthode améliore l'adaptation de la quantité de carburant injecté dans le moteur lors d'une opération de démarrage intervenant après l'estimation de la capacité du carburant à se vaporiser. Néanmoins, le résultat obtenu est peu fiable compte tenus d'autres paramètres influençant la mesure effectuée.

L'invention vise à améliorer la robustesse de la prestation démarrage notamment à froid en proposant de faire varier la calibration d'un gradient de référence en fonction de l'évolution d'un couple de frottement interne au moteur.

A cet effet, l'invention a pour objet un procédé de démarrage d'un moteur à combustion interne associé à des moyens pour adapter, lors d'une opération de démarrage du moteur, une quantité de carburant injectée en fonction d'une estimation de la volatilité du carburant basée sur la comparaison entre un gradient de régime moteur mesuré lors d'une précédente opération de démarrage et un gradient de référence correspondant à un carburant prédéfini, caractérisé par une étape de correction du gradient de référence en fonction d'une évolution d'un couple de frottement du moteur.

Avantageusement, le moteur est associé à des moyens de contrôle supervisant son fonctionnement qui utilisent eux-mêmes l'évolution du couple de frottement. La mise en oeuvre de l'invention peut ainsi être effectuée sans la nécessité d'ajouter dans le véhicule un capteur supplémentaire pour la mesure de l'évolution du couple de frottement, cette donnée étant déjà disponible au niveau du contrôle moteur.

Conventionnellement, on peut déterminer les gradients de régime à partir d'une première combustion intervenue lors de l'opération de démarrage.

Avantageusement, la correction du gradient de régime est proportionnelle au rapport entre l'évolution du couple de frottement et une inertie du moteur.

On peut déterminer les gradients de régime comme une différence de régime du moteur entre deux combustions successives et la correction du gradient de régime proportionnelle au temps séparant les deux combustions successives.

Avantageusement, le gradient de référence est fonction d'une température du moteur et du nombre de combustions effectuées depuis la première combustion.

On peut définir plusieurs gradients de référence pour des valeurs distinctes de capacité de carburant à se vaporiser. La quantité de carburant à injecter peut être définie de façon linéaire ou de façon discrète en fonction de la valeur du gradient mesuré par rapport aux valeurs de référence.

Lors d'une opération de démarrage, on peut tenir compte du gradient mesuré au cours d'une ou de plusieurs premières opérations de démarrage antérieures. On peut par exemple réaliser une moyenne sur plusieurs démarrages ou encore éliminer une mesure de gradient aberrante.

La présente invention s'applique tout particulièrement aux moteurs dits « essence », dont l'allumage est commandé, et plus particulièrement aux moteurs susceptibles d'être alimentés par différents types de carburants, notamment des carburants « essence » ou à base d'alcool (pur ou en mélange avec de l'essence), en particulier, les moteurs du type FLEXFUEL.

L'invention sera mieux comprise et d'autres avantages apparaîtront à la lecture de la description détaillée d'un mode de réalisation donné à titre d'exemple, description illustrée par le dessin joint dans lequel :

la figure 1 représente un exemple d'évolution du régime d'un moteur lors d'une opération de démarrage ;

la figure 2 représente un exemple d'évolution mesurée de régime moteur par rapport à une évolution de référence ;

la figure 3 représente schématiquement une correction apportée à l'évolution de régime de référence en fonction de variations dans des couples de frottement internes du moteur.

Par souci de clarté, les mêmes éléments porteront les mêmes repères dans les différentes figures.

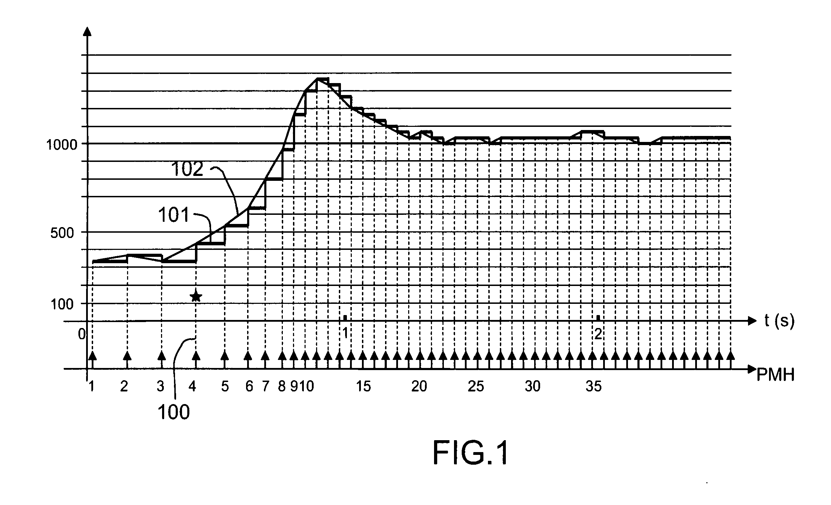

La figure 1 représente sous forme de chronogramme un exemple d'évolution du régime d'un moteur lors d'une opération de démarrage. Les abscisses sont graduées en secondes et en PMH, pour point mort haut. Cette deuxième graduation correspond à des instants où des combustions sont susceptibles d'intervenir. Ces instants sont matérialisés par des flèches verticales poursuivies par des traits pointillés. En ordonnée la vitesse de rotation ou régime du moteur est exprimé en tours par minute.

A l'instant origine, 0 sur l'axe des temps, une opération de démarrage du moteur débute. Jusqu'au quatrième point mort haut, un démarreur du véhicule entraîne le moteur à un régime compris entre 300 et 400 tours par minutes. Au quatrième point mort haut, une première combustion 100 intervient dans un cylindre du moteur. Cette première combustion est matérialisée par une étoile à cinq branches sur la figure 1. Au-delà du quatrième point mort haut le régime du moteur croît jusqu'à atteindre environ 1400 tours par minute pour ensuite décroître et se stabiliser à environ 1000 tours par minute après le vingtième point mort haut. En pratique, le régime du moteur est mesuré à chaque point mort haut, d'où la représentation d'une courbe 101 en escalier reliant les valeurs de régime du moteur de chaque point mort haut. Une autre courbe 102 lissée relie directement les valeurs de régime du moteur mesurées aux différents points mort haut.

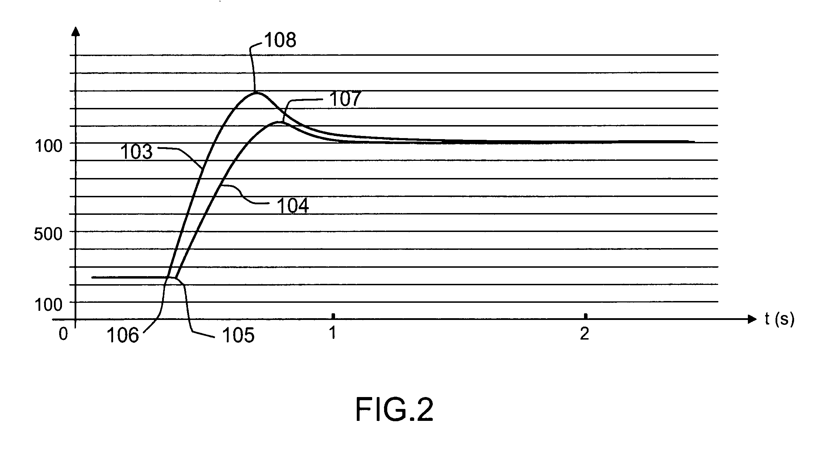

La figure 2 représente, dans le même repère que celui de la figure 1, une évolution 103 dite de référence semblable à la courbe 102. L'évolution 103 est idéale pour le moteur. Lorsqu'une opération de démarrage suit l'évolution 103, le moteur rejette le minimum possible de polluants. Le réglage de la quantité de carburant injecté dans les cylindres du moteur lors d'une opération de démarrage doit être réalisé pour s'approcher au mieux de l'évolution 103.

Sur la figure 2 une autre courbe 104 représente une évolution réelle et mesurée d'une opération de démarrage. La première combustion 105 de l'évolution 104 intervient après la première combustion 106 de l'évolution 103. Le régime maximum 107 atteint par l'évolution 104 est de l'ordre de 1100 tours par minute. Le régime 107 est inférieur au régime maximum 108 atteint par l'évolution 103. De plus, lors de la montée en régime, après la première combustion, le gradient de l'évolution 104, ou pente de la courbe 104, est inférieur au gradient de l'évolution 103.

On sait que ce gradient est fonction de la PVR du carburant utilisé. Par ailleurs on s'est rendu compte que ce gradient dépendait également du couple de frottement du moteur. On entend par couple de frottement du moteur l'ensemble des éléments résistants s'opposant à la rotation du moteur sans qu'une vitesse ne soit enclenchée. Le couple de frottement est notamment généré à l'intérieur du moteur et dans l'ensemble de la chaîne de transmission jusqu'à un dispositif d'embrayage du véhicule. Ces éléments résistants sont exprimés en couple et sont fonction de différents paramètres tel que le régime du moteur.

Le régime du moteur peut être déterminé facilement par mesure et est donc pris en compte dans l'évolution de référence 103. Le couple de frottement initial du moteur, c'est à dire existant lorsque le moteur est neuf est également pris en compte dans l'évolution de référence 103. Par contre le couple de frottement est susceptible d'évoluer dans le courant de la vie du moteur. Par exemple, l'usure du moteur et la modification d'un lubrifiant utilisé dans le moteur font évoluer le couple de frottement.

En conséquence pour un même carburant (PVR identique), en maintenant les quantités de carburant injecté identiques, on peut avoir différentes évolutions mesurées du régime moteur lors d'une opération de démarrage. En conservant une évolution de référence constante, on risque de faire évoluer les quantités de carburant injecté lorsque le couple de frottement varie. Ceci entraînerait un fonctionnement du moteur s'éloignant de la stoechiométrie et donc générant des polluants.

Selon l'invention, on corrige l'évolution de référence en fonction des variations du couple de frottement du moteur pour améliorer le fonctionnement du moteur.

Par ailleurs, le véhicules modernes sont équipés de moyens de contrôle du moteur. Ces moyens mettent par exemple en oeuvre une structure couple asservissant un couple CME disponible sur l'arbre moteur en fonction d'une consigne exprimée par l'enfoncement d'une pédale d'accélérateur du véhicule, pédale manoeuvrée par un conducteur du véhicule. A ce couple CME il faut ajouter le couple de frottement CMF du moteur et de la chaîne de distribution pour obtenir un couple CMI qui doit être fourni par la combustion interne du moteur.

Les moyens de contrôle du moteur mesurent l'évolution du couple de frottement ∆CMF durant la vie du moteur. Selon l'invention, on utilise l'information concernant l'évolution du couple de frottement ∆CMF pour corriger le gradient de référence.

De façon générale, un couple est égal au produit d'une inertie par un gradient de vitesse. Appliqué au moteur lorsqu'il tourne au ralenti, sans entraîner les roues, on a donc :

$$CMF = J_{mot} \cdot \frac{d\omega_{mot}}{dt} \quad (1)$$

ou encore :

$$\frac{d\omega_{mot}}{dt} = \frac{CMF}{J_{mot}} \quad (2)$$

équation dans laquelle $J_{mot}$ représente l'inertie du moteur, $\omega_{mot}$ représente la vitesse de rotation du moteur et t le temps.

En introduisant l'évolution du couple de frottement ∆CMF, l'équation (2) devient :

$$\frac{d\omega_{mot\_ref\_corrigé}}{dt} = -\frac{\Delta CMF}{J_{mot}} + \frac{d\omega_{mot\_ref}}{dt} \quad (3)$$

équation dans laquelle $\dfrac{d\omega_{mot\_ref}}{dt}$ représente le gradient de référence de la vitesse de rotation du moteur et

$\dfrac{d\omega_{mot\_ref\_corrigé}}{dt}$ représente le gradient de référence corrigé de la vitesse de rotation du moteur.

On peut transformer l'équation (3) pour la ramener à des paramètres facilement mesurables dans le moteur :

$$(N_n - N_{n-1})_{ref\_corrigé} = -\frac{\Delta CMF}{J_{mot}} * \frac{30}{\pi} * T_{PMH} + (N_n - N_{n-1})_{ref} \quad (4)$$

Dans l'équation (4), les vitesses de rotation du moteur Ni sont exprimées en tours par minute à des instants i auxquels des combustions sont susceptibles d'intervenir. TPMH exprimé en secondes représente l'intervalle de temps séparant deux instants précédemment décrits. Le facteur $\dfrac{30}{\pi}$ permet d'assurer l'homogénéité de la formule pour ramener les radians par seconde en tours par minutes.

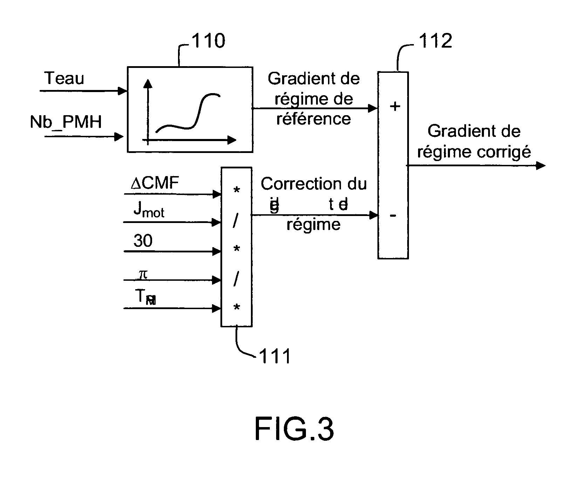

La figure 3 représente sous forme schématique l'équation (4). Un cadre 110 représente un tableau définissant le gradient de référence $(N_n - N_{n-1})_{ref}$. La valeur du gradient de référence est fonction d'une température du moteur, par exemple la température d'un fluide de refroidissement du moteur, notée Teau en entrée du cadre 110, et du nombre de PMH, noté Nb_PMH, écoulé depuis la première combustion.

La correction $\dfrac{\Delta CMF}{J_{mot}} * \dfrac{30}{\pi} * T_{PMH}$ fonction de l'évolution du couple de frottement du moteur est représentée dans un cadre 111. L'application de la correction au gradient de référence est représentée au cadre 112 pour obtenir le gradient de régime corrigé.

Par la suite, le gradient mesuré est comparé au gradient de régime corrigé. Le résultat de cette comparaison est fonction de la PVR du carburant utilisé par le moteur. On peut donc modifier la quantité de carburant injecté lors d'un prochain démarrage pour que le gradient mesuré soit au plus près du gradient corrigé.

**Revendications**

1. Procédé de démarrage d'un moteur à combustion interne associé à des moyens pour adapter, lors d'une opération de démarrage du moteur, une quantité de carburant injectée en fonction d'une estimation de la volatilité (PVR) du carburant basée sur la comparaison entre un gradient de régime moteur mesuré lors d'une précédente opération de démarrage et un gradient de référence (110) correspondant à un carburant prédéfini, **caractérisé par** une étape (111) de correction du gradient de référence en fonction d'une évolution (ΔCMF) d'un couple de frottement du moteur.

2. Procédé selon la revendication 1, **caractérisé en ce que** le véhicule comporte des moyens de contrôle du moteur et **en ce que** l'évolution (ΔCMF) du couple de frottement est mesurée pour les besoins des moyens de contrôle du moteur.

3. Procédé selon l'une des revendications précédentes, **caractérisé en ce que** les gradients de régime (110) sont déterminés à partir d'une première combustion intervenue lors de l'opération de démarrage.

4. Procédé selon l'une des revendications précédentes, **caractérisé en ce que** la correction (111) du gradient de régime est proportionnelle au rapport entre l'évolution du couple de frottement et une inertie du moteur.

5. Procédé selon l'une des revendications précédentes, **caractérisé en ce que** les gradients de régime (110) sont déterminés comme une différence de régime du moteur entre deux combustions successives et **en ce que** la correction (111) du gradient de régime est proportionnelle au temps ($T_{PMH}$) séparant les deux combustions successives.

6. Procédé selon l'une des revendications précédentes, **caractérisé en ce que** le gradient de référence est fonction d'une température (Teau) du moteur et du nombre (Nb_PMH) de combustions effectuées depuis la première combustion (100, 105, 106).

7. Procédé selon l'une des revendications précédentes, **caractérisé en ce qu'**on définit plusieurs gradients de référence (110) pour des valeurs distinctes de capacité de carburant à se vaporiser et **en ce que** la quantité de carburant à injecter est définie de façon linéaire en fonction de la valeur du gradient mesuré par rapport aux valeurs de référence.

8. Procédé selon l'une quelconque des revendications 1 à 6, **caractérisé en ce qu'**on définit plusieurs gradients de référence (110) pour des valeurs distinctes de capacité de carburant à se vaporiser et **en ce que** la quantité de carburant à injecter est définie de façon discrète en fonction de la valeur du gradient mesuré par rapport aux valeurs de référence.

9. Procédé selon l'une des revendications précédentes, **caractérisé en ce que** lors d'une opération de démarrage, on tient compte du gradient mesuré au cours d'une ou de plusieurs premières opérations de démarrage antérieures.

10. Procédé selon l'une des revendications précédentes mis en oeuvre avec un moteur à combustion interne à allumage commandé.

11. Procédé selon la revendicaton 10, mis en oeuvre avec un moteur à combustion interne à allumage commandé du type FLEXFUEL.

**Claims**

1.  A method for starting an internal combustion engine associated with means for adjusting, during a starting operation of the engine, an injected quantity of fuel as a function of an estimation of the volatility (RVP) of the fuel, based on the comparison between an engine speed gradient measured during a preceding starting operation and a reference gradient (110) corresponding to a predefined fuel, **characterized by** a correction step (111) of the reference gradient as a function of an evolution ($\Delta$CMF) of a friction torque of the engine.

2.  The method according to Claim 1, **characterized in that** the vehicle comprises means for controlling the engine and **in that** the evolution ($\Delta$CMF) of the friction torque is measured for the needs of the control means of the engine.

3.  The method according to one of the preceding claims, **characterized in that** the speed gradients (110) are determined from a first combustion that occurred during the starting operation.

4.  The method according to one of the preceding claims, **characterized in that** the correction (111) of the speed gradient is proportional to the ratio between the evolution of the friction torque and an inertia of the engine.

5.  The method according to one of the preceding claims, **characterized in that** the speed gradients (110) are determined as a difference in engine speed between two successive combustions and **in that** the correction (111) of the speed gradient is proportional to the time ($T_{PMH}$) separating the two successive combustions.

6.  The method according to one of the preceding claims, **characterized in that** the reference gradient is a function of a temperature ($T_{water}$) of the engine and of the number (Nb_PMH) of combustions that occurred since the first combustion (100, 105, 106).

7.  The method according to one of the preceding claims, **characterized in that** several reference gradients are (110) are defined for distinct values of the vaporizing capacity of the fuel and **in that** the quantity of fuel to be injected is defined in a linear manner as a function of the measured gradient value with respect to the reference values.

8.  The method according to any one of Claims 1 to 6, **characterized in that** several reference gradients (110) are defined for distinct values of the vaporizing capacity of the fuel and **in that** the quantity of fuel to be injected is defined in a discrete manner as a function of the measured gradient value with respect to the reference values.

9.  The method according to one of the preceding claims, **characterized in that** during a starting operation the gradient measured in the course of one or several preceding starting operations is taken into account.

10. The method according to one of the preceding claims, implemented with an internal combustion engine with spark ignition.

11. The method according to Claim 10, implemented with an internal combustion with spark ignition of the FLEXFUEL type.

**Patentansprüche**

1.  Verfahren zum Starten eines Verbrennungsmotors, der mit Mitteln verbunden ist, um bei einem Startvorgang des Motors eine Kraftstoffmenge anzupassen, die in Abhängigkeit von einer Schätzung der Flüchtigkeit (PVR) des Kraftstoffs basierend auf dem Vergleich zwischen einem Drehzahlgradienten des Motors, der bei einem vorhergehenden Startvorgang gemessen wurde, und einem Bezugsgradienten (110), der einem vorbestimmten Kraftstoff entspricht, eingespritzt wird, **gekennzeichnet durch** einen Schritt (111) zur Korrektur des Bezugsgradienten in Abhängigkeit von einer Entwicklung ($\Delta$CMF) eines Reibungsmoments des Motors.

2.  Verfahren nach Anspruch 1, **dadurch gekennzeichnet, dass** das Fahrzeug Mittel zum Steuern des Motors aufweist, und dass die Entwicklung ($\Delta$CMF) des Reibungsmoments für die Bedürfnisse der Steuermittel des Motors gemessen wird.

3. Verfahren nach einem der vorhergehenden Ansprüche, **dadurch gekennzeichnet, dass** die Drehzahlgradienten (110) ausgehend von einer ersten Verbrennung, die bei dem Startvorgang aufgetreten ist, bestimmt werden.

4. Verfahren nach einem der vorhergehenden Ansprüche, **dadurch gekennzeichnet, dass** die Korrektur (111) des Drehzahlgradienten zu dem Verhältnis zwischen der Entwicklung des Reibungsmoments und einer Trägheit des Motors proportional ist.

5. Verfahren nach einem der vorhergehenden Ansprüche, **dadurch gekennzeichnet, dass** die Drehzahlgradienten (110) als ein Drehzahlunterschied zwischen zwei aufeinander folgenden Verbrennungen bestimmt werden, und dass die Korrektur (111) des Drehzahlgradienten zu der Zeit ($T_{PMH}$), die die zwei aufeinander folgenden Verbrennungen trennt, anteilsmäßig ist.

6. Verfahren nach einem der vorhergehenden Ansprüche, **dadurch gekennzeichnet, dass** der Bezugsgradient von einer Temperatur ($T_{Wasser}$) des Motors und von der Anzahl (Anz_PMH) Verbrennungen, die seit der ersten Verbrennung (100, 105, 106) ausgeführt wurden, abhängt.

7. Verfahren nach einem der vorhergehenden Ansprüche, **dadurch gekennzeichnet, dass** man mehrere Bezugsgradienten (110) für getrennte Werte der Kapazität eines Kraftstoffs zu verdampfen definiert, und dass die einzuspritzende Kraftstoffmenge linear in Abhängigkeit von dem Wert des im Vergleich zu den Bezugswerten gemessenen Gradienten definiert wird.

8. Verfahren nach einem der Ansprüche 1 bis 6, **dadurch gekennzeichnet, dass** man mehrere Bezugsgradienten (110) für getrennte Werte der Kapazität eines Kraftstoffs zu verdampfen definiert, und dass die einzuspritzende Kraftstoffmenge diskret in Abhängigkeit von dem Wert des im Vergleich zu den Bezugswerten gemessenen Gradienten definiert wird.

9. Verfahren nach einem der vorhergehenden Ansprüche, **dadurch gekennzeichnet, dass** man ein bei einem Startvorgang den im Laufe einer oder mehrerer erster früherer Startoperationen gemessenen Gradienten berücksichtigt.

10. Verfahren nach einem der vorhergehenden Ansprüche, das mit einem Verbrennungsmotor mit gesteuertem Starten umgesetzt wird.

11. Verfahren nach Anspruch 10, das mit einem Verbrennungsmotor mit gesteuertem Starten des Typs FLEXFUEL umgesetzt wird.

FIG.1

FIG.2

EP 2 162 609 B1

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP A517024 A1